(19) Europäisches Patentamt
European Patent Office
Office européen des brevets

(11) **EP 2 076 868 B1**

(12) **EUROPEAN PATENT SPECIFICATION**

(45) Date of publication and mention of the grant of the patent:
**26.06.2013 Bulletin 2013/26**

(51) Int Cl.:
***G06K 7/10*** *(2006.01)*

(21) Application number: **07826601.2**

(22) Date of filing: **01.10.2007**

(86) International application number:
**PCT/IB2007/053975**

(87) International publication number:
**WO 2008/047264 (24.04.2008 Gazette 2008/17)**

(54) **TRANSCEIVING CIRCUIT FOR CONTACTLESS COMMUNICATION**

SENDE-/EMPFANGSSCHALTUNG FÜR KONTAKTLOSE KOMMUNIKATION

CIRCUIT D'ÉMISSION-RÉCEPTION POUR COMMUNICATION SANS CONTACT

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.10.2006 EP 06021910**

(43) Date of publication of application:
**08.07.2009 Bulletin 2009/28**

(73) Proprietor: **NXP B.V.**
**5656 AG Eindhoven (NL)**

(72) Inventor: **MERLIN, Erich**
**1102 Vienna (AT)**

(74) Representative: **Schouten, Marcus Maria et al**
**NXP B.V.**
**IP & Licensing Department**
**High Tech Campus 60**
**5656 AG Eindhoven (NL)**

(56) References cited:
**US-A1- 2006 186 995**

• **"NEAR FIELD COMMUNICATION PN511-TRANSMISSION MODULE" PHILIPS SEMICONDUCTORS. SHORT FORM SPECIFICATION, XX, XX, 1 February 2004 (2004-02-01), pages 1-18, XP007900762**
• **"NEAR FIELD COMMUNICATION PN531-MUC BASED TRANSMISSION MODULE" PHILIPS SEMICONDUCTORS. SHORT FORM SPECIFICATION, XX, XX, vol. Revision 2.0, 1 February 2004 (2004-02-01), pages 1-19, XP007900763**

**Description**

FIELD OF THE INVENTION

The invention relates to a transceiving circuit for contactless communication comprising:

transmitter means being adapted to generate an electromagnetic carrier signal, to modulate the carrier signal according to transmitting data and to drive an antenna with the modulated carrier signal, receiver means being adapted to sense response signals being received at the antenna and to demodulate the response signals, wherein the transmitter means are connected to the antenna by means of at least a first transmitting path, wherein a first DC decoupling capacitor is switched into the first transmitting path, wherein a receiving path branches off from the first transmitting path to the receiver means.

The invention further relates to an NFC device or an RFID reader/writer device.

BACKGROUND OF INVENTION

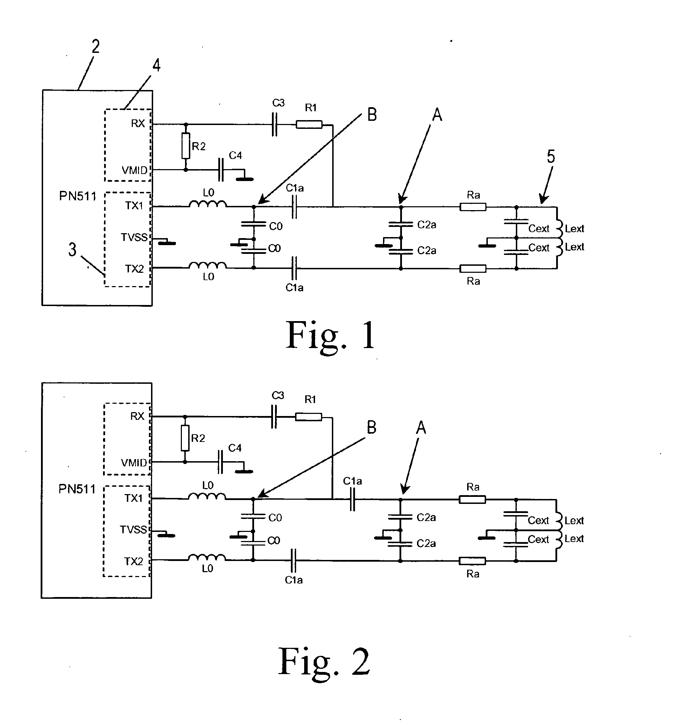

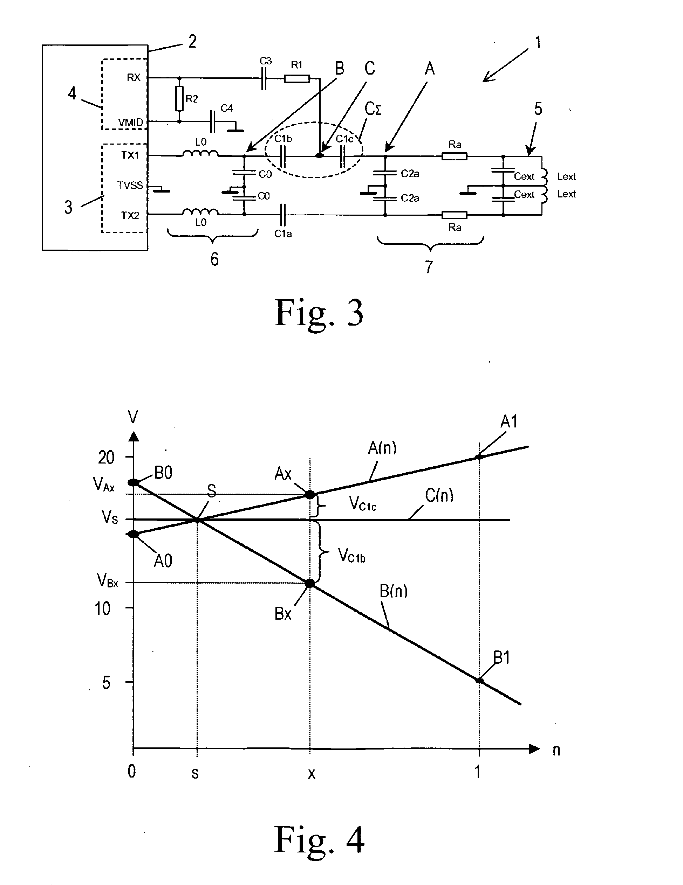

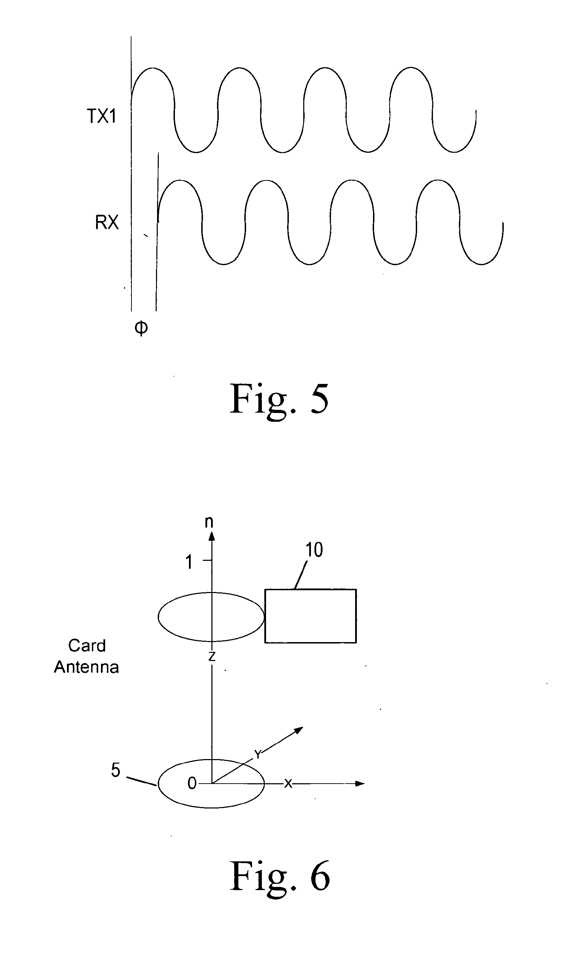

Figs. 1 and 2 show known implementations of transceiving circuits for contactless communication. These transceiving circuits employ an integrated near field communication transmission module 2, type no. PN511, manufactured by Philips Semiconductors and external passive electronic components. The transmission module 2 is integrally equipped with transmitter means 3 being adapted to generate an electromagnetic carrier signal, to modulate the carrier signal according to transmitting data and to drive an antenna 5 with the modulated carrier signal, and with receiver means 4 being adapted to sense response signals being received at the antenna 5 and to demodulate the response signals. The transmission module 2 has output terminals being connectable to first and second transmitting paths TX1, TX2 wherein the transmitting paths TX1, TX2 are connected to the antenna 5, being represented in the figures 1 and 2 by its equivalent circuit components, namely capacitances Cext and inductances Lext. Between the transmission module 2 and the antenna 5 the following devices are switched into the transmitting paths TX1, TX2: an electromagnetic compatibility (EMC) filter comprising two inductors L0 and two capacitors C0; DC decoupling capacitors C1a; and an impedance matching network comprising capacitors C2a and ohmic resistors Ra. Further, the transmission module 2 has an input terminal that is connected to a receiving path RX that branches off from the first transmitting path TX1. In Fig. 1 the branching point of the receiving path RX is located between the DC decoupling capacitor C1a and the impedance matching network. The branching point has the same voltage as a first measuring point A on the first transmitting path TX1. In Fig. 2 the branching point of the receiving path RX is located between the EMC filter and the DC decoupling capacitor C1a. In this second embodiment the branching point has the same voltagc as a second measuring point B on the first transmitting path TX1. A disadvantage of these known transceiving circuits is, that the voltage at the branching point of the receiving path RX from the first transmitting path TX1 is not stable, but varies depending on the load onto the antenna 5. The term "load onto the antenna" means that there are one or more RFID devices or other resonant circuits within the range of the antenna 5 so that the antenna 5 couples to these devices or circuits, which in turn results in detuning of the antenna 5. It should be noted, that during manufacturing of the transceiving circuits the antenna 3 is "tuned" by means of the impedance matching network. However, exact tuning can only be achieved for one load state of the antenna 5 and hence varying loads inevitably result in detuning of the antenna 5. The consequences for the voltage at the receiving path caused by detuning of the antenna 5 depend on the location of the branching point of the receiving path RX from the first transmitting path TX1, as can be seen in the graph of Fig. 4, which depicts the voltages V measured at measuring points A and B, respectively, against a normalized distance n between the antenna 5 and an RFID or NFC device or a reference resonant circuit. The line A(n) represents the change of the voltage at measuring point A when the distance between an RFID or NFC device or a reference resonant circuit 10 and the antenna 5 is varied. The schematic measuring arrangement is shown is Fig. 6. It will be appreciated that the voltage at measuring point A steadily increases with an increasing distance between the antenna 5 and the RFID or NFC device or the reference resonant circuit 10. or in other words with a decrease of the load onto the antenna 5. The line B(n) represents the change of the voltage at measuring point B when the distance between the RFID or NFC device or the reference resonant circuit 10 and the antenna 5 is varied. It will be appreciated that the voltage at measuring point B steadily decreases with an increasing distance between the antenna 5 and the RFID or NFC device or the reference resonant circuit 10. Due to that the receiver means 4 have to handle a very high dynamic range of the voltage that may be applied to them.

"NEAR FIELD COMMUNICATION PN511-TRANSMISSION MODULE" PHILIPS SEMICONDUCTORS. SHORT FORM SPECIFICATION, Revision 2.0, 1 February 2004 (2004-02-01), pages 1-18, and,
"NEAR FIELD COMMUNICATION PN531-MUC BASED TRANSMISSION MODULE" PHILIPS SEMICONDUCTORS.

SHORT FORM SPECIFICATION, Revision 2.0, 1 February 2004 (2004-02-01), pages 1-19 XP007900763 disclose such transmission modules.

OBJECT AND SUMMARY OF THE INVENTION

It is an object of the invention to provide a transceiving circuit for contactless communication of the type defined in the opening paragraph and an NFC device, an RFID reader/writer device or an RFID card device, in which the disadvantages defined above are avoided.

A transceiving circuit according to the invention can be characterized as defined in claim 1.

The characteristic features according to the invention provide the advantage that the voltage at the receiving path RX remains stable and essentially constant even in the event of varying loads at the antenna. Therefore, the dynamic range at the receiving path RX is greatly reduced so that amplifying and decoding circuits of the receiving section of the transmission module can be designed with less effort and higher performance. Further, it is achieved that the voltages at the receiving path RX always remain within a predefined range, even under negative influences of the environment, like external electromagnetic fields or external resonance circuits. Finally, the whole performance of the transceiving circuit is improved due to the fact that the voltage-level at the receiving path RX can be set higher compared with circuits according to prior art, because this voltage is not influenced by detuning of the antenna and due to the fact that higher voltages at the receiving path RX enable better demodulating of the received signals.

The invention is applicable to both asymmetric and symmetric antenna configurations. In the latter case; the transmitter means are connected to the antenna by a second transmitting path, wherein a third DC decoupling capacitor is switched into the second transmitting path. In order to achieve the best results with a symmetric antenna it is preferred to dimension the total capacity of the first and second DC decoupling capacitors such that it is essentially equal to the capacity of the third DC decoupling capacitor.

The ratio of the capacities of the first and second DC decoupling capacitors is determined such that the voltage at the branching point remains constant for varying loads onto the antenna.

In order to protect the transceiving circuit against electromagnetic surges and other external signals, it is suggested to switch an electromagnetic compatibility filter into the transmitting path(s) between the transmitter means and DC decoupling capacitors.

By switching an impedance matching network into the transmitting path(s) between DC decoupling capacitors and the antenna, a very high ratio of the power of the transmitted signals to the consumed electric power can be achieved.

In another embodiment of the invention a phase adjusting capacitor is switched into the receiving path, enabling to adjust the phase of signals between the transmission path and the receiving path, thereby achieving optimal demodulation.

In order to adjust the voltage level appearing at the receiving path, it is suggested to serially switch an ohmic resistor into the receiving path.

The transceiving circuit according to the invention can be incorporated in an NFC device, an RFID reader/writer device or an RFID card.

The aspects defined above and further aspects of the invention are apparent from the exemplary embodiment to be described hereinafter and are explained with reference to this exemplary embodiment.

BRIEF DESCRIPTION OF THE DRAWINGS

The invention will be described in more detail hereinafter with reference to an exemplary embodiment. However, the invention is not limited to this exemplary embodiment.

Fig. 1 shows a circuit diagram of a transceiving circuit for contactless communication according to prior art.
Fig. 2 shows a circuit diagram of another embodiment of a transceiving circuit for contactless communication according to prior art.
Fig. 3 shows a circuit diagram of a transceiving circuit for contactless communication according to the present invention.
Fig. 4 shows a graph which depicts voltages measured at measuring points A, B and C, respectively, against a normalized distance n between the antenna of the transceiving circuit and an RFID or NFC device or a reference resonant circuit.
Fig. 5 shows a graph illustrating a phase angle $\Phi$ of signals between the first transmission path TX1 and the receiving path RX.
Fig. 6 shows a schematic block diagram of a measuring arrangement for transceiving circuits.
Fig. 7 shows a block diagram of a known transmission module.

DESCRIPTION OF EMBODIMENTS

Fig. 3 shows a circuit diagram of a transceiving circuit 1 according to the present invention. This transceiving circuit comprises an integrated RFID transmission module 2, e.g. a Reader IC or a near field communication transmission module. The transmission module 2 comprises transmitter means 3 and receiver means 4.

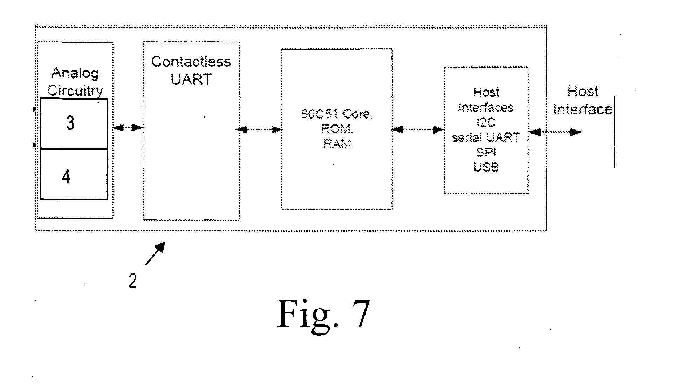

For a better understanding of the function of the RFID transmission module 2, a block diagram of the near field communication (NFC) transmission module type no. PN511 is shown in Fig. 7. The NFC transmission module 2 comprises analog circuitry which can be roughly divided into transmitter means 3 and receiver means 4. Although not shown, the analog circuitry comprises output drivers, an integrated demodulator, a bit decoder, a mode detector and an RF-level detector. A contactless UART communicates with the analog circuitry via a bus. The contactless UART comprises data processing means, CRC/Parity generation and checking means, frame generation and checking means, and bit coding and decoding means. The UART further communicates with a microprocessor, comprising a 80C51 core, ROM and RAM. A host interface enables to connect the transmission module to external devices. The host interface may comprise I2C, serial UART, SPI and/or USB interfaces. Further details of the transmission module can be looked up in the respective data sheets which are publicly available.

Now returning to the circuit diagram of Fig. 3 the explanation of the transceiving circuit 1 is continued. The transmitter means 3 of the RFID transmission module 2 generate an electromagnetic carrier signal. The carrier signal is modulated according to transmitting data. An antenna 5 is driven with the modulated carrier signal. The antenna 5 is configured as a symmetric antenna, i.e. the output terminals of the transmitter means 3 are connected to first and second transmitting paths TX1, TX2 and the other ends of the transmitting paths TX1, TX2 are connected to the connecting terminals of the antenna 5. The antenna 5 is represented by its equivalent circuit components, namely two capacitances Cext and two inductances Lext. A center tapping of the antenna is connected to ground voltage. However, due to the symmetric design this center tapping is not indispensable. In order to protect the transmitter means 3 against electric surges, an electromagnetic compatibility (EMC) filter 6 comprising two inductors L0 and two capacitors C0 is switched into the first and second transmitting paths TX1, TX2. Further, an impedance matching network 7 comprising two capacitors C2a and two ohmic resistors Ra is switched into the first and second transmitting paths TX1, TX2. Further, the transmission module 2 has an input terminal that is connected to a receiving path RX that branches off from the first transmitting path TX1. A phase adjusting capacitor C3 is switched into the receiving path RX in order to enable adjusting of the phase angle $\Phi$ of signals between the first transmission path TX1 and the receiving path RX, see the chart in Fig. 5. By adjusting the phase angle $\Phi$, an optimal demodulation can be achieved. Further, an ohmic resistor R1 is serially switched into the receiving path RX. With this resistor R1 the voltage level appearing at the input of the receiver means 4 can be adjusted. Numeral VMID depicts an analog reference voltage input of the receiver means 4.

In the first transmitting path TX1 a first DC decoupling capacitor C1b is serially switched in between the EMC filter 6 and the impedance matching network 7. Similarly, in the second transmitting path TX2 a third DC decoupling capacitor C1a is serially switched in between the EMC filter 6 and the impedance matching network 7.

According to the invention a second DC decoupling capacitor C1c is switched into the first transmitting path (TX1) in series to the first DC decoupling capacitor (C1b), and the receiving path RX branches off from the first transmitting path TX1 at a branching point C being located between the first and second DC decoupling capacitors C1b, C1c. The first and second DC decoupling capacitors C1b, C1c establish a capacitive voltage divider, wherein the branching point C acts as a tapping of the capacitive voltage divider. The advantage of providing a capacitive voltage divider instead of using a single capacitor like in prior art circuits and by branching the receiving path RX from the tapping between the two capacitors C1b, C1c is that the voltage at the receiving path RX is stable and by choosing appropriate values of capacitances for the first and second DC decoupling capacitors C1b, C1c, can even be kept constant. This principle of the invention will be explained below with reference to Fig. 4 which shows graphs of voltages measured at measuring points A and B and the branching point C, respectively, against a normalized distance n between the antenna 5 of the transceiving circuit 1 and an RFID or NFC device or a reference resonant circuit.

The measuring arrangement for plotting the voltages at measuring points A, B and the branching point C is schematically shown in Fig. 6, wherein the antenna 5 of the transceiving circuit is positioned in the center of a Cartesian coordinate system (x,y,z) and a reference resonant circuit 10 is moved along the z-axis. The distance n between the antenna 5 and the reference resonant circuit 10 is normalized to values between 0 and 1. Varying the distance n between the antenna 5 and the reference resonant circuit 10 results in a varying detuning of the antenna 5 the consequences of which can be seen in the graph of Fig. 4. At measuring point A the voltage increases with an increasing distance n between the antenna 5 and the reference resonant circuit 10 as a linear function A(n). At measuring point B the voltage decreases with an increasing distance n between the antenna 5 and the reference resonant circuit 10 as a linear function B(n). However, with proper dimensioning of the capacitors C1b and C1c the voltage at branching point C remains essentially constant as represented by the horizontal line C(n). As will be appreciated, in the graph of Fig. 4 for any value x of the distance n points Ax and Bx can be calculated from the functions A(n) and B(n), respectively, wherein point Ax has a voltage VAx and point Bx has a voltage VBx. Further, a sectional point S can be calculated as the crossing of the functions A(n) and B(n) having a distance value s and a voltage Vs. The horizontal line C(n) passes through the sectional point S. The voltage drop VC1c across the capacitor C1c can be calculated by the formula:

$$VC1c = VAx - VS$$

The voltage VC1b across the capacitor C1b can be calculated by the formula:

$$VC1b = VS - VBx$$

The sum of the voltages VC1b and VC1c yields the total voltage across the capacitive voltage divider established by the capacitors C1b and C1c, wherein the total capacitance CΣ of the voltage divider can be calculated as:

$$C\Sigma = C1b \cdot C1c / (C1b + C1c)$$

Further, for symmetry reasons, it is preferred to set the capacitances CΣ and C1a equal, i.e.:

$$C\Sigma = C1a$$

In the following an example is given how to correctly calculate the dimensions of the capacitors C1a, C1b, C1c in order to achieve a horizontal line C(n). In this example it is assumed that when the reference resonant circuit 10 is positioned directly on the antenna 5, i.e. distance n = 0, a voltage V of 15 Volts is measured at the measuring point A and a voltage V of 18 Volts at the measuring point B. It is further assumed that at a normalized distance n = 1 between the reference resonant circuit 10 and the antenna 5 the voltages V measured at the measuring points A and B are 20 Volts and 5 Volts, respectively. Hence, in the Cartesian coordinate system (V, n) of Fig. 4 we can write these measuring values as four coordinate points:

$$A0 = (0, 15)$$

$$A1 = (1, 20)$$

$$B0 = (0, 18)$$

$$B1 = (1, 5)$$

With these coordinate points the lines A(n) and B(n) are represented by the following equations:

$$A(n): \quad V = 15 + 5 \cdot n$$

$$B(n): \quad V = 18 - 13 \cdot n$$

By inserting one of the above equations into the other the sectional point S can be calculated as:

$$S = (1/6, 95/6)$$

Bearing in mind that for any value x of the distance n the invariant ratio k of the voltages across the capacitor C1c and the total capacitance $C\Sigma$ can be calculated by:

$$k = VC1c / (VC1c + VC1b) = (VAx - VS) / (VAx - VBx)$$

and bearing further in mind that we have defmed $C\Sigma = C1a$ we are able to calculate the impedances

$$ZC1b = k \cdot ZC1a$$

and

$$ZC1c = (1 - k) \cdot ZC1a$$

wherein:

$$ZC1a = 1 / (\omega \cdot C1a)$$

$$ZC1b = 1 / (\omega \cdot C1b)$$

$$ZC1c = 1 / (\omega \cdot C1c)$$

With the above equations we are further able to calculate the mutual ratios of the capacitances of the capacitors C1a, Cab, C1c as:

$$C1b = C1a / k$$

and

$$C1c = C1a / (1 - k)$$

wherein, with the above exemplary values it follows that k = 0,2778 so that:

$$C1b = C1a / 0,2778$$

and

$$C1c = C1a / (0,7222)$$

In practice it is appropriate to choose a capacitance value for the capacitor C1a according to common design rules or according to empirical definitions, and then to calculate the capacitance values for the capacitors C1b and C1c.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.


**Claims**

1.    A transceiving circuit (1) for contactless communication, comprising:

transmitter means (3) being adapted to generate an electromagnetic carrier signal, to modulate the carrier signal according to transmitting data and to drive an antenna (5) with the modulated carrier signal,
receiver means (4) being adapted to sense response signals being received at the antenna (5) and to demodulate the response signals,
wherein the transmitter means (3) are connected to the antenna (5) by means of at least a first transmitting path (TX1), wherein a first DC decoupling capacitor (C1b) is switched into the first transmitting path (TX1),
wherein a receiving path (RX) branches off from the first transmitting path (TX1) to the receiver means (4),
wherein a second DC decoupling capacitor (C1c) is switched into the first transmitting path (TX1) in series to the first DC decoupling capacitor (C1b),
wherein the receiving path (RX) branches off from the first transmitting path (TX1) at a branching point (C) being located between the first and second DC decoupling capacitors (C1b, C1c), and
wherein the ratio of the capacities of the first and second DC decoupling capacitors (C1b, C1c is determined such that the voltage at the branching point (C) remains constant for varying loads onto the antenna (5)

2.    The transceiving circuit as claimed in claim 1, wherein the transmitter means (3) are connected to the antenna (5) by a second transmitting path (TX2), wherein a third DC decoupling capacitor (C1a) is switched into the second transmitting path (TX2).

3.    The transceiving circuit as claimed in claim 2, wherein a total capacity (C$\Sigma$) of the first and second DC decoupling capacitors (C1b and C1c) is essentially equal to the capacity of the third DC decoupling capacitor (C1a).

4.    The transceiving circuit as claimed in one of claims 1 to 3, wherein an electromagnetic compatibility (EMC) filter (6) is switched into the transmitting path(s) (TX1, TX2) between the transmitter means (3) and DC decoupling capacitors (C1b, C1a).

5.    The transceiving circuit as claiined in one of claims 1 to 4, wherein an impedance matching network (7) is switched into the transmitting path(s) (TX1, TX2) between DC decoupling capacitors (C1c, C1a) and the antenna (5).

6.    The transceiving circuit as claimed in one of claims 1 to 5, wherein a phase adjusting capacitor (C3) is switched into the receiving path (Rx).

7. The transceiving circuit as claimed in one of claims 1 to 6, wherein an ohmic resistor (R1) is switched into the receiving path.

8. An NFC device, an RFID reader/writer device or an RFID card, comprising a transceiving circuit (1) according to one of claims 1 to 7.

**Patentansprüche**

1. Eine Transceiver Schaltung (1) für kontaktfreie Kommunikation, welche aufweist:

   Übertragungsmittel (3), welche eingerichtet sind

   um ein elektromagnetisches Trägersignal zu erzeugen,
   um das Trägersignal gemäß Übertragungsdaten zu modulieren und
   um eine Antenne (5) mit dem modulierten Trägersignal zu betreiben,

   Empfängermittel (4), welche eingerichtet sind, um Antwortsignale abzutasten, die an der Antenne (5) empfangen werden, und um die Antwortsignale zu demodulieren,
   wobei die Übertragungsmittel (3) mit der Antenne (5) mittels mindestens eines ersten Übertragungspfads (TX1) verbunden sind, wobei ein erster DC Entkopplungskondensator (C1b) in den ersten Übertragungspfad (TX1) geschaltet ist,
   wobei ein Empfängerpfad (RX) von dem ersten Übertragungspfad (TX1) zu den Empfängermitteln (4) abzweigt,
   wobei ein zweiter DC Entkopplungskondensator (C1c) in den ersten Übertragungspfad (TX1) mit dem ersten DC Entkopplungskondensator (C1b) in Serie geschaltet ist,
   wobei der Empfängerpfad (RX) von dem ersten Übertragungspfad (TX1) an einem Verzweigungspunkt (C) abzweigt, welcher zwischen dem ersten und zweiten DC Entkopplungskondensator (C1b, C1c) liegt, und
   wobei das Verhältnis der Kapazitäten des ersten und zweiten Entkopplungskondensators (C1b, C1c) so bestimmt ist, dass die Spannung an dem Verzweigungspunkt (C) für wechselnde Lasten auf der Antenne (5) konstant bleibt.

2. Die Transceiver Schaltung gemäß Anspruch 1, wobei die Übertragungsmittel (3) mit der Antenne (5) mittels eines zweiten Übertragungspfads (TX2) verbunden sind, wobei ein dritter DC Entkopplungskondensator (C1a) in den zweiten Übertragungspfad geschaltet ist.

3. Die Transceiver Schaltung gemäß Anspruch 2, wobei eine Gesamtkapazität ($C_\Sigma$) des ersten und zweiten Entkopplungskondensators (C1b und C1c) im Wesentlichen gleich zu der Kapazität des dritten Entkopplungskondensators (C1a) ist.

4. Die Transceiver Schaltung gemäß einem der Ansprüche 1 bis 3, wobei ein elektromagnetischer Kompatibilitätsfilter (EMC) (6) in den (die) Übertragungspfad(e) (TX1, TX2), zwischen die Übertragungsmittel (3) und die DC Entkopplungskondensatoren (C1b, C1a) geschaltet ist.

5. Die Transceiver Schaltung gemäß einem der Ansprüche 1 bis 4, wobei ein Impedanz Anpassungsnetzwerk (7) in den (die) Übertragungspfad(e) (TX1, TX2), zwischen die DC Entkopplungskondensatoren (C1c, C1a) und die Antenne (5) geschaltet ist.

6. Die Transceiver Schaltung gemäß einem der Ansprüche 1 bis 5, wobei ein Phaseneinstellungskondensator (C3) in den Empfängerpfad (Rx) geschaltet ist.

7. Die Transceiver Schaltung gemäß einem der Ansprüche 1 bis 6, wobei ein ohmscher Widerstand (R1) in den Empfängerpfad geschaltet ist.

8. Eine NFC Vorrichtung, eine RFID Leser/Schreiber Vorrichtung oder eine RFID Karte, welche eine Transceiver Schaltung (1) gemäß einem der Ansprüche 1 bis 7 aufweist.

**Revendications**

1. Circuit d'émission-réception (1) pour des communications sans contact, comprenant :

   des moyens d'émission (3) agencés de manière à générer un signal de porteuse électromagnétique, à moduler le signal de porteuse en fonction des données à transmettre et à piloter une antenne (5) à l'aide du signal de porteuse modulé,
   des moyens de réception (4) agencés de manière à détecter des signaux de réponse reçus sur l'antenne (5) et à démoduler les signaux de réponse,
   dans lequel les moyens d'émission (3) sont raccordés à l'antenne (5) au moyen d'au moins un premier circuit de transmission (TX1), dans lequel un premier condensateur de découplage continu (C1b) est commuté dans le premier circuit d'émission (TX1),
   dans lequel un circuit de réception (RX) part en dérivation du premier circuit d'émission (TX1) vers les moyens de réception (4),
   dans lequel un deuxième condensateur de découplage continu (C1c) est commuté dans le premier circuit d'émission (TX1) en série avec le premier condensateur de découplage continu (C1b),
   dans lequel le circuit de réception (RX) part en dérivation du premier circuit d'émission (TX1) en un point de dérivation (C) situé entre le premier et le deuxième condensateurs de découplage continu (C1b, C1c), et
   dans lequel le rapport des capacités du premier et du deuxième condensateurs de découplage continu (C1b, C1c) est déterminé de telle manière que la tension au point de dérivation (C) reste constante pour des charges variables sur l'antenne (5).

2. Circuit d'émission-réception selon la revendication 1, dans lequel les moyens d'émission (3) sont raccordés à l'antenne (5) par un deuxième circuit d'émission (TX2), dans lequel un troisième condensateur de découplage continu (C1a) est commuté dans le deuxième circuit d'émission (TX2).

3. Circuit d'émission-réception selon la revendication 2, dans lequel la capacité totale (C$_\Sigma$) du premier et du deuxième condensateurs de découplage continu (C1b et C1c) est essentiellement égale à la capacité du troisième condensateur de découplage continu (C1a).

4. Circuit d'émission-réception selon l'une des revendications 1 à 3, dans lequel un filtre (6) de compatibilité électromagnétique (EMC) est commuté dans le ou les circuits d'émission (TX1, TX2) entre les moyens d'émission (3) et les condensateurs de découplage continu (C1b, C1a).

5. Circuit d'émission-réception selon l'une des revendications 1 à 4, dans lequel un réseau d'adaptation d'impédance (7) est commuté dans le ou les circuits d'émission (TX1, TX2) entre les condensateurs de découplage continu (C1c, C1a) et l'antenne (5).

6. Circuit d'émission-réception selon l'une des revendications 1 à 5, dans lequel un condensateur de réglage de phase (C3) est commuté dans le circuit de réception (Rx).

7. Circuit d'émission-réception selon l'une des revendications 1 à 6, dans lequel une résistance ohmique (R1) est commutée dans le circuit de réception.

8. Dispositif de communication en champ proche (NFC), dispositif de lecture/écriture de RFID ou carte RAID, comprenant un circuit d'émission-réception (1) selon l'une des revendications 1 à 7.

Fig. 1

Fig. 2

Fig. 3

Fig. 4

# Fig. 5

Card
Antenna

# Fig. 6

| Analog Circuitry | | Contactless UART | | 80C51 Core, ROM, RAM | | Host Interfaces I2C serial UART SPI USB | | Host Interface |
| --- | --- | --- | --- | --- | --- | --- | --- | --- |
| 3 | | | | | | | | |
| 4 | | | | | | | | |

2

# Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- NEAR FIELD COMMUNICATION PN511-TRANSMISSION MODULE. *PHILIPS SEMICONDUCTORS. SHORT FORM SPECIFICATION,* 01 February 2004, 1-18

- NEAR FIELD COMMUNICATION PN531-MUC BASED TRANSMISSION MODULE. *PHILIPS SEMICONDUCTORS. SHORT FORM SPECIFICATION,* 01 February 2004, 1-19